(19) **Europäisches Patentamt**

**European Patent Office**

**Office européen des brevets**

(11) **EP 0 606 577 B1**

(12) **EUROPÄISCHE PATENTSCHRIFT**

(45) Veröffentlichungstag und Bekanntmachung des Hinweises auf die Patenterteilung:
**06.03.1996 Patentblatt 1996/10**

(51) Int. Cl.$^6$: **B05B 7/14**, B05B 15/12

(21) Anmeldenummer: **93119452.6**

(22) Anmeldetag: **02.12.1993**

(54) **Pulver-Sprühbeschichtungsvorrichtung**

Powder spray coating device

Dispositif de revêtement de poudre par pulverisation

(84) Benannte Vertragsstaaten:
**AT CH DE IT LI**

(30) Priorität: **14.01.1993 DE 4300832**

(43) Veröffentlichungstag der Anmeldung:
**20.07.1994 Patentblatt 1994/29**

(73) Patentinhaber: **Gema Volstatic AG**
**CH-9015 St. Gallen (CH)**

(72) Erfinder: **Gelain, Silvano**
**CH-9030 Abtwil (CH)**

(74) Vertreter: **Vetter, Ewald Otto, Dipl.-Ing.**
**Patentanwaltsbüro**
**Allgeier & Vetter**
**Postfach 10 26 05**
**D-86016 Augsburg (DE)**

(56) Entgegenhaltungen:
**EP-A- 0 225 842**      **DE-A- 1 910 487**
**DE-A- 2 546 920**

## Beschreibung

Die Erfindung betrifft eine Pulver-Sprühbeschichtungsvorrichtung gemäß dem Oberbegriff von Anspruch 1.

Eine solche Pulver-Sprühbeschichtungsvorrichtung ist aus der DE-PS 25 46 920 bekannt.Ferner ist es bekannt, das Pulver vor oder unmittelbar nach dem Versprühen elektrostatisch aufzuladen, damit es von dem zu beschichtenden Gegenstand elektrostatisch angezogen wird, welcher geerdet ist. Vorzugsweise wird auch bei der Pulver-Sprühbeschichtungsvorrichtung nach der Erfindung das Pulver elektrostatisch aufgeladen.

Das frische Pulver befindet sich in einem Behälter. An dem zu beschichtenden Gegenstand nicht haftendes oder an ihm vorbeigesprühtes Pulver wird zurückgewonnen, in den Behälter zurückgeleitet und zusammen mit frischem Pulver wieder der Sprühvorrichntung zugeführt. Das Pulver wird vom Behälter aus pneumatisch zur Sprühvorrichtung gefördert. Damit das Pulver aus dem Behälter leicht und gleichmäßig entnommen werden kann, wird es im Behälter "fluidisiert". Hierfür wird in den Behälter Luft eingeblasen, in welcher die Pulverpartikel im Behälter schweben. Aus einem Lieferantenbehälter, einem sogenannten Gebinde, wird frisches Pulver in den Behälter nachgefüllt. Aus der EP 0 184 994 B1 ist eine Pulverabsaugvorrichtung bekannt, welche in das Pulver in einem Lieferantenbehälter eingetaucht werden kann. Diese Pulverabsaugvorrichtung fluidisiert das Pulver im Lieferantenbehälter und saugt das fluidisierte Pulver ab. Dadurch kann der Lieferantenbehälter als Behälter für die Sprühbeschichtungsvorrichtung verwendet werden und das Pulver braucht nicht vom Lieferantenbehälter in einen zusätzlichen Behälter der Sprühbeschichtungsvorrichtung umgefüllt zu werden. Aus dem Stand der Technik ist es auch bekannt, den Behälter in Vibration zu versetzen, damit das Pulver in ihm gelockert wird.

Bei allen bekannten Vorrichtungen wird das Pulver aus dem Behälter der Sprühbeschichtungsvorrichtung oder aus dem Lieferantenbehälter durch eine pneumatische Pumpe abgesaugt, welche üblicherweise ein Injektor ist. Der Injektor arbeitet nach dem Venturi-Prinzip. Ein Druckluftstrom erzeugt im Injektor einen Unterdruck, durch welchen Pulver aus dem betreffenden Behälter oder Lieferantenbehälter abgesaugt und dann zusammen mit dem Luftstrom pneumatisch transportiert wird.

Das Nachfüllen eines Behälters der Sprühbeschichtungsvorrichtung oder eines Lieferantenbehälters mit frischem Pulver kann von Hand oder pneumatisch durch einen Injektor erfolgen.

Durch die Erfindung soll die Aufgabe gelöst werden, bei einer Pulver-Sprühbeschichtungsvorrichtung der eingangs genannten Art in einen Behälter frisches Pulver kontrolliert gesteuert nachzufüllen, ohne daß dafür eine pneumatische Pumpe wie beispielsweise ein Injektor erforderlich ist. Ferner soll durch die Erfindung die Möglichkeit geschaffen werden, daß die Sprühbeschichtungsvorrichtung ohne einen besonderen Pulver-Behälter arbeiten kann, sondern als Pulver-Behälter Lieferanten-Behälter verwendet werden können, sogenannte "Gebinde". Dies können Säcke, Kartons, Behälter aus Kunststoff, massive oder flexible Behälter sein, oder in einen Außenbehälter eingesetzte Säcke oder Beutel.

Diese Aufgabe wird gemäß der Erfindung durch die kennzeichnenden Merkmale von Anspruch 1 gelöst.

Weitere Merkmale der Erfindung sind in den Unteransprüchen enthalten.

Die Erfindung wird im folgenden mit Bezug auf die Zeichnungen anhand einer bevorzugten Ausführungsform als Beispiel beschrieben. In den Zeichnungen zeigen:

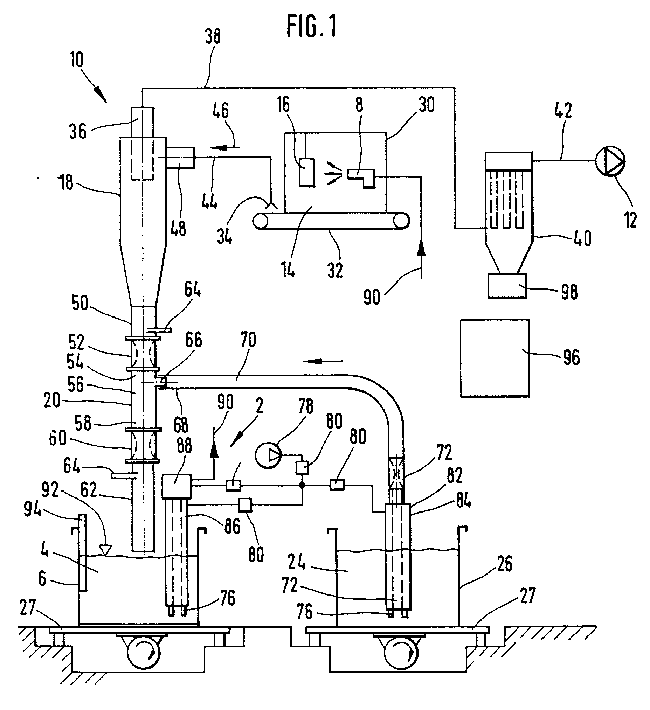

Fig.1   schematisch eine Pulver-Sprühbeschichtungsvorrichtung nach der Erfindung und

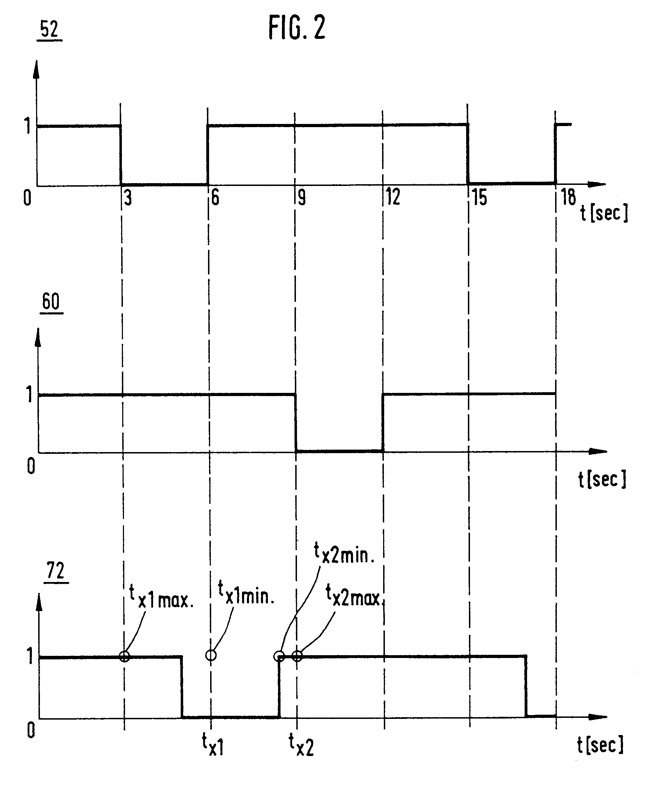

Fig.2   ein Funktionsschema mit drei übereinander angeordneten Zeitdiagrammen, auf deren Horizontalachse in gleichem Maßstab die Öffnungszeiten und Schließzeiten von Absperrorganen angegeben ist und auf deren Vertikalachse mit "0" die Offen-Stellung des betreffenden Absperrorgangs und mit "1" die Schließstellung des betreffenden Absperrorgans angegeben ist. Das oberste Zeitdiagramm ist für ein Absperrorgan am Eingang einer Schleuse; das mittlere Zeitdiagramm ist für ein Absperrorgan am Ausgang der Schleuse; und das untere Zeitdiagramm ist für ein Absperrorganin einer Zuleitung für frisches Pulver.

Die in Fig. 1 dargestellte Pulver-Sprühbeschichtungsvorrichtung zum elektrostatischen Sprühbeschichten von Gegenständen mit Pulver enthält eine Pulverzufuhreinrichtung 2 zur pneumatischen Förderung von Pulver 4 aus einem Haupt-Behälter 6 zu mindestens einer Sprühvorrichtung 8. Ferner enthält sie eine Pulverrückgewinnungsvorrichtung 10, welche eine Unterdruckquelle 12 zur Erzeugung eines Unterdruckes zum Absaugen von versprühtem, überschüssigem Pulver 14, welches nicht an einem zu beschichtenden Gegenstand 16 haftet, einen Pulverabscheider 18 zum Trennen des abgesaugten überschüssigen Pulvers 14 vom Saugluftstrom der Unterdruckquelle 12, und eine Schleuse 20 aufweist, durch welche das vom Saugluftstrom getrennte Pulver vom Pulverabscheider 18 in den Haupt-Behälter 6 zurückgelangt. Durch den Unterdruck der Unterdruckquelle 12 wird frisches Pulver 24 aus einem zweiten Behälter 26 in die Pulverrückgewinnungsvorrichtung 10 gesaugt und dann von der Pulverrückgewinnungsvorrichtung auf dem gleichen Weg wie das vom Saugluftstrom getrennte überschüssige Pulver in den Haupt-Behälter 6 geleitet.

Der Haupt-Behälter 6 und der zweite Behälter 26 sind jeweils Lieferantenbehälter oder sogenannte Gebinde,mit welchen der Pulverlieferant das Pulver dem Pulveranwender liefert, welcher das Pulver mit der dargestellten Pulver-Sprühbeschichtungsvorrichtung auf die zu beschichtenden Gegenstände 16 sprüht. Beide Behälter 6 und 26 stehen je auf einem Vibrationstisch 27.

Die zu beschichtenden Gegenstände 16 werden von der Sprühvorrichtung 8 in einer Kabine 30 beschichtet, durch welche sie in Kabinenlängsrichtung automatisch hindurchtransportiert werden. Am Gegenstand 16 nicht haftendes oder an ihm vorbeigesprühtes Pulver fällt auf den Kabinenboden. Bei der dargestellten Ausführungsform ist der Kabinenboden durch ein endloses umlaufendes Filterband 32 gebildet, von welchem außerhalb der Kabine 3 eine Saugdüse 34 das überschüssige Pulver 14 durch den Unterdruck der Unterdruckquelle 12 absaugt. Bei anderen Ausführungsformen könnte anstelle eines endlosen Filterbandes 32 und der Saugdüse 34 ein Saugkanal am Boden der Kabine 30 vorgesehen sein.

Bei der dargestellten Ausführungsform ist der Pulverabscheider 18 ein Zyklon, vorzugsweise ein sogenannter Mini-Zyklon. Sein Luftauslaß 36 ist über eine Leitung 38, einen Filter 40 und eine sich anschließende Leitung 42 an die Saugseite der Unterdruckquelle 12 angeschlossen. Der Filter 40, auch "Filterabscheider" genannt, filtert aus dem Luftstrom der Leitung 38 Pulverreste und Pulverstaub, welche mit dem Zyklon 18 nicht aus dem Saugluftstrom abgeschieden werden konnten, welcher von der Saugdüse 34 über eine Saugleitung 44 entsprechend einem Pfeil 46 durch einen Pulver-Eingang 48 in den oberen Endabschnitt des Zyklons 18 gelangt. Der weitaus größte Teil des von der Saugdüse 34 abgesaugten überschüssigen Pulvers wird im Zyklon 18 abgeschieden und fällt durch Schwerkraft durch die Schleuse 20 hindurch in den Haupt-Behälter 6.

Das untere Ende des Zyklons 18 ist über ein Zwischenstück 50 an ein erstes Absperrorgan 52 am Eingang 54 einer Schleusenkammer 56 der Schleuse 20 angeschlossen. An dem darunterliegenden Ausgang 58 der Schleusenkammer 56 befindet sich ebenfalls ein Absperrorgan 60. An das untere Ende des zweiten Absperrorgans 60 ist ein Pulver-Ausfallrohr 62 angeschlossen. Die beiden Absperrorgane 52 und 60 können wechselweise geöffnet oder geschlossen werden. Wenn das obere Absperrorgan 52 geöffnet ist, ist das untere Absperrorgan 60 geschlossen, damit zurückgewonnenes Pulver vom Zyklon 18 in die Schleusenkammer 56 fallen kann. Anschließend wird das obere Absperrorgan 52 geschlossen und das untere Absperrorgan 60 geöffnet, damit das Pulver aus der Schleusenkammer 56 in den Haupt-Behälter 6 fallen kann. Oberhalb oder unterhalb der Schleuse 20 kann ein Sieb 64 zum Sieben des zurückgewonnenen Pulvers angeordnet sein, wie dies in Fig. 1 schematisch dargestellt ist.

Die Schleusenkammer 56 ist nahe ihres oberen Endes mit einem Frischpulver-Einlaß 66 versehen, an welchen das stromabwärtige Ende 68 einer Frischpulverzuleitung 70 angeschlossen ist, deren stromabwärtiges Ende 72 im zweiten Behälter 26 in das Frischpulver 24 eingetaucht ist.

Wenn das untere, zweite Absperrorgan 60 geschlossen und das obere, erste Absperrorgan 52 geöffnet ist, wird in der Schleusenkammer 56 durch den Saugluftstrom der Unterdruckquelle 12 im Zyklon 18 ein Unterdruck erzeugt. Dieser Unterdruck bleibt in der Schleusenkammer 56 auch dann bestehen, wenn anschließend das erste Absperrorgan 52 geschlossen wird, sofern der Frischpulvereinlaß 66 geschlossen ist oder die Frischpulverzuleitung 70 durch ein drittes Absperrorgan 72 geschlossen ist. Das dritte Absperrorgan 72 befindet sich vorzugsweise im stromaufwärtigen Teil der Frischpulverzuleitung 70. Dieser in der Schleusenkammer 56 herrschende Unterdruck wird dazu verwendet, um frisches Pulver 24 aus dem zweiten Behälter 26 durch die Frischpulverzuleitung 70 hindurch in die Schleusenkammer 56 zu saugen. Während dieser Pulveransaugung muß das zweite Absperrorgan 60 am unteren Ausgang 58 der Schleusenkammer 56 geschlossen bleiben. Das erste Absperrorgan 52 am Eingang 54 der Schleusenkammer 56 kann offen oder geschlossen sein. Wenn dieses erste Absperrorgan 52 geschlossen ist, läßt die Saugwirkung in der Frischpulverleitung 70 schnell nach, wenn das dritte Absperrorgan 72 geöffnet wird. Wenn jedoch das erste Absperrorgan 52 am Eingang 54 der Schleusenkammer 56 offen bleibt, wenn das dritte Absperrorgan 72 geöffnet wird, dann wird die Abscheidewirkung im Zyklon 18 gestört, weil die Unterdruckquelle 12 dann aus der Frischpulverzuleitung 70 ein Pulver-Luft-Gemisch ansaugt. Gemäß einem bevorzugten Betriebsverfahren wird deshalb das dritte Absperrorgan 72 in der Frischpulverzuleitung 70 erst kurz vor Ablauf der "Offen"-Zeitdauer des ersten Absperrorgangs 52 am Eingang 54 geöffnet und dann während einer relativ dazu längeren Zeitdauer nach dem Schließen des ersten Absperrorgans 52 noch offen gehalten. Erst anschließend wird dann auch das dritte Absperrorgan 72 geschlossen. Und erst danach, wenn das erste Absperrorgang 52 und das dritte Absperrorgan 72 geschlossen sind, wird das dritte Absperrorgan 60 geöffnet, damit das in der Schleusenkammer 56 gespeicherte, zurückgewonnene Pulver der Absaugdüse 34 und das angesaugte frische Pulver des zweiten Behälters 26 durch das Abfallrohr 62 in den Haupt-Behälter 6 fallen kann. Durch dieses bevorzugte Betriebsverfahren wird eine hohe Saugleistung auf eine ausreichend lange Zeit in der Schleusenkammer 56 erzeugt, um genügend Frischpulver 24 durch die Frischpulverzuleitung 70 aus dem zweiten Behälter 26 in die Schleusenkammer 56 zu saugen, und die Abscheidewirkung im Zyklon 18 wird nur unbedeutend gestört.

Fig. 2 zeigt oben das Zeitdiagramm für das erste Absperrorgan 52, in der Mitte das Zeitdiagramm für das zweite Absperrorgan 60 und unten das Zeitdiagramm für das dritte Absperrorgan 72.

In jedem Diagramm ist auf der Vertikalachse mit "O" die Offen-Stellung des Absperrorgans und mit "1" die Schließ-Stellung des betreffenden Absperrorgans angegeben. Auf der Horizontalachse ist jeweils in gleichem Maßstab die Zeit in Sekunden angegeben, während welcher das betreffende Absperrorgan geöffnet oder geschlossen ist. Als Beispiel ist in Fig.2 das erste Asperrorgan 52 von der dritten bis zur sechsten Sekunde offen, während es von der sechsten bis zur fünfzehnten Sekunde geschlossen ist. Das zweite Absperrorgan 60 ist bis zur neunten Sekunde geschlossen, von der neunten bis zwoelften Sekunde geöffnet, und dann wieder geschlossen. Das dritte Absperrorgan 72 ist bis zur fünften Sekunde geschlossen, dann von der fünften bis zur 8,5-ten Sekunde geöffnet und dann wieder geschlossen. Für das dritte Absperrorgan 72 ist der Öffnungszeitpunkt bei fünf Sekunden mit $t_{x1}$ und der Schließzeitpunkt bei 8,5 Sekunden mit $t_{x2}$ bezeichnet. Es kann auch später geschlossen werden, jedoch nicht später als zum Zeitpunkt $t_{x2max}$ bei 9 Sekunden, weil hier das zweite Absperrorgan 60 am Auslaß 58 der Schleusenkammer 56 geöffnet wird. Keinen Einfluß hat der Öffnungszeitpunkt des dritten Absperrorgans 72 auf die Abscheiderwirkung des Zyklons 18 dann, wenn es erst vom Zeitpunkt $t_{x1min}$ bei sechs Sekunden geöffnet wird, weil zu diesem Zeitpunkt das erste Absperrorgan 52 geschlossen wird. Der frühest mögliche Zeitpunkt, zu welchem das dritte Absperrorgan 72 geöffnet werden kann, um frisches Pulver in die Schleusenkammer 56 zu saugen, ist $t_{x1max}$ bei drei Sekunden, weil zu diesem Zeitpunkt das erste Absperrorgan 52 öffnet und damit erst zu diesem Zeitpunkt in der Schleußenkammer 56 eine Saugwirkung erzeugt wird.

Die Absperrorgane 52, 60 und 72 sind vorzugsweise "Quetschventile".

Nahe des stromaufwärtigen Anfangs 72 der Frischpulverzuleitung 70 wird über Verteilerelemente 76, welches vorzugsweise feinporige Schalldämpferelemente sind, Druckluft zur Fluidisierung des Frischpulvers 24 in den zweiten Behälter 26 geleitet. Die Luft wird von einer Druckluftquelle 78 über einen Druckregler 80 und ein zur Frischpulverleitung 70 koaxiales Rohr 82 den Luftverteilerelementen 76 zugeleitet. Der Anfang 72 der Frischpulverzuleitung 70 und das Rohr 82 bilden eine Taucheinheit 84, die in das frische Pulver 24 des zweiten Behälters 26 eingetaucht ist. Der an die Schleusenkammer 56 angeschlossene stromabwärtige Abschnitt der Frischpulverleitung 70 besteht vorzugsweise aus einem flexiblen Schlauch.

Die Pulverzufuhreinrichtung 2 enthält eine in das Pulver 4 des Haupt-Behälters 6 eingetauchte Pulverabsaugvorrichtung 86, welche an ihrem in dieses Pulver 4 des Haupt-Behälters 6 eingetauchten unteren Ende ebenfalls mit Luftverteilerelementen 76 versehen ist, und zusätzlich an ihrem oberen Ende einen Injektor 88 zur pneumatischen Zufuhr des aus dem Haupt-Behälter 6 abgesaugten Pulvers über einen Schlauch 90 zur Sprühvorrichtung 8 aufweist. Die Pulverabsaugvorrichtung 86 wird von der Druckluftquelle 78 über weitere Druckregler 80 mit Druckluft versorgt.

Das Pulver-Niveau 92 im Haupt-Behälter 6 wird durch eine Sonde 94 überwacht. In Abhängigkeit von diesem Pulver-Niveau 92 wird die Zufuhr von frischem Pulver 24 aus dem zweiten Behälter 26 durch eine Vorrichtung 96 automatisch gesteuert, welche die Absperrorgane 52,60 und 72 steuert.

Die dargestelle Sprühbeschichtungsvorrichtung mit dem Mini-Zyklon 18 als Pulverabscheider eignet sich besonders für "Mehrfarbenbetrieb", bei welchem wechselweise verschiedene Pulversorten verwendet werden.Das vom Filter 40 ausgeschiedene Rest-Pulver fällt in einen Behälter 98 als Abfall. Für "Einfarbenbetrieb" kann anstelle des Mini-Zyklons 18 der Filterabscheider 40 angeordnet werden, in welchem Falle der Abfallbehälter 98 entfällt und das untere Ende dieses Filters 40 über das Zwischenstück 50 an das obere Absperrorgan 52 angeschlossen wird.

Bei allen Ausführungsformen erfolgt die Frischpulverzufuhr aus dem zweiten Behälter 26 automatisch. Lediglich für die Förderung von Pulver 4 aus dem Haupt-Behälter 6 zur Sprühvorrichtung 8 ist ein Injektor erforderlich. Jedoch ist für die gesamte Frischpulver-Förderung aus dem zweiten Behälter 26 kein Injektor und keine andere Pumpe erforderlich. Es wird lediglich der Unterdruck in der Schleusenkammer 20 ausgenützt.

Das Pulver-Niveau 92 im Haupt-Behälter 6 wird von der Sonde 94 überwacht. Bei Niveau-Minimum spricht die Sonde 94 an und die Frischpulverzufuhr wird automatisch ausgelöst. Das Frischpulver 24 gelangt dann vom zweiten Behälter 26 über die Frischpulverzuleitung 70 und die Schleusenkammer 56 in den Haupt-Behälter 6. Bei Auslösung der Frischpulverzufuhr wird das dritte Absperrorgan 72 geöffnet. Durch den Unterdruck in der Schleusenkammer 20 gelangt das Frischpulver 24 schubweise durch die Frischpulverzuleitung 70 hindurch in die Schleusenkammer 56. Wenn in dem Haupt-Behälter 6 genügend Pulver vorhanden ist, spricht die Niveau-Sonde 94 an. Das Absperrorgayn 72 in der Frischpulverzuleitung 70 wird dann wieder geschlossen. Je näher das dritte Absperrorgan 72 beim stromaufwärtigen Anfang 72 der Frischpulverzuleitung 70 angeordnet ist, desto größer ist die in dieser Frischpulverzuleitung 70 zwischen diesem dritten Absperrorgan 72 und der Schleusenkammer 56 verbleibende Pulvermenge, wenn dieses dritte Absperrorgan 72 geschlossen wird.

Gemäß den Diagrammen von Fig.2 ergeben sich für das dritte Absperrorgan 72 in der Frischpulverzuleitung 70 folgende Öffnungszeiten zwischen $t_{x1min}$ und $t_{x2max}$:

Bei $t_{x1max}$, beispielsweise bei drei Sekunden, öffnet das erste Absperrorgan 52 am Eingang 54 der Schleusenkammer 56. Zu diesem Zeitpunkt wird die Pulverabscheidewirkung im Zyklon leicht gestört, d.h. es ergibt sich ein höherer Pulververlust durch den Zyklon.

Bei $t_{x1min}$, beispielsweise bei sechs Sekunden, schließt das erste Absperrorgan 52 wieder. Dies wäre bezüglich des Pulververlustes im Zyklon 18 der ideale Zeitpunkt zum Öffnen des dritten Absperrorgans 72 der Frischpulverzuleitung 70. Es bedingt jedoch eine verhältnismäßig große Schleusenkammer 56.

In der Praxis wird das dritte Absperrorgan 72 der Frischpulverzuleitung bei $t_{x1}$ bei weniger als 6s und damit unmittelbar vor dem Schließen des ersten Absperrorgans 52 geöffnet. Dies entspricht dem bevorzugten Betriebsverfahren. Die Funktion des Zyklons 18 wird hierbei nur sehr kurzzeitig und damit unbedeutend gestört.

Bei $t_{x2} = t_{x2min}$ bei weniger als 9s, z.B. bei 8,5 s, oder bei $t_{x2} = t_{x2max}$, z.B. bei 9s, wird das dritte Absperrorgan 72 der Frischpulverzuleitung 70 kurz vor dem Öffnen des zweiten Absperrorgans 60 oder spätestens beim Öffnen dieses zweiten Absperrorgans 60 am Ausgang 58 der Schleusenkammer 56 geöffnet, wie dies aus Fig. 2 hervorgeht. Dadurch bleibt in der Frischpulverzuleitung 70 immer ein leichter Unterdruck vorhanden, solange das zweite Absperrorgan 60 geschlossen ist.

Die Zufuhr von Frischpulver 24 aus dem zweiten Behälter 26 wird von der Einrichtung 96 in Abhängigkeit vom Pulverniveau 92 im Hauptbehälter 6, welches von der Sonde 94 überwacht wird, automatisch gesteuert.

## Patentansprüche

1. Pulver-Sprühbeschichtungsvorrichtung mit

   - einer Pulverzufuhreinrichtung (2) zur pneumatischen Förderung von Pulver aus einem Haupt-Behälter (6) zu mindestens einer Sprühvorrichtung (8),
   - einer Pulverrückgewinnungsvorrichtung (10), welche eine Unterdruckquelle (12) zur Erzeugung eines Unterdruckes zum Absaugen von versprühtem, überschüssigem Pulver, welches nicht an einem zu beschichtenden Gegenstand haftet, einen Pulverabscheider (18) zum Trennen des abgesaugten überschüssigen Pulvers vom Saugluftstrom der Unterdruckquelle, und eine Schleuse (20) aufweist, durch welche das vom Saugluftstrom getrennte Pulver vom Pulverabscheider in den Haupt-Behälter zurückgelangt,
   **dadurch gekennzeichnet,**
   daß durch den Unterdruck der Unterdruckquelle (12) frisches Pulver (24) aus einem zweiten Behälter (26) in die Pulverrückgewinnungsvorrichtung (10) gesaugt wird und dann von der Rückgewinnungsvorrichtung auf dem gleichen Weg wie das überschüssige Pulver in den Haupt-Behälter (6) geleitet wird.

2. Pulver-Sprühbeschichtungsvorrichtung nach Anspruch 1,
   **dadurch gekennzeichnet,**
   daß die Schleuse (20) eine Schleusenkammer (56) aufweist, deren Eingang (54) durch ein erstes Absperrorgan (52) und deren Ausgang (58) durch ein zweites Absperrorgan (60) geschlossen und geöffnet werden können, wobei der Ausgang geschlossen ist, wenn der Eingang geöffnet ist, und der Ausgang nur geöffnet werden kann, wenn der Eingang geschlossen ist, und daß eine Frischpulverzuleitung für die Zuführung des Frischpulvers an die Schleusenkammer (56) angeschlossen ist.

3. Pulver-Sprühbeschichtungsvorrichtung nach Anspruch 2,
   **dadurch gekennzeichnet,**
   daß die Schleusenkammer (56) so groß ist, daß sie zusätzlich zu dem überschüssigem Pulver vom Pulverabscheider (18) gleichzeitig auch frisches Pulver (24) aus dem zweiten Behälter (26) enthalten kann.

4. Pulver-Sprühbeschichtungsvorrichtung nach einem der Ansprüche 2 bis 3,
   **dadurch gekennzeichnet,**
   daß das zweite Absperrorgan (60) am Ausgang der Schleusenkammer (56) geschlossen ist, während das frische Pulver (24) durch den in der Schleusenkammer (56) herrschenden Unterdruck in diese Schleusenkammer gesaugt wird.

5. Pulver-Sprühbeschichtungsvorrichtung nach einem der Ansprüche 1 bis 4,
   **dadurch gekennzeichnet,**
   daß im zweiten Behälter eine Vorrichtung (76, 82) zur Fluidisierung des frischen Pulvers (24) vorgesehen ist.

6. Pulver-Sprühbeschichtungsvorrichtung nach einem der Ansprüche 2 bis 5,
   **dadurch gekennzeichnet,**
   daß sich in der Frischpulverzuleitung (70) mindestens ein drittes Absperrorgan (72) befindet, daß zum Saugen von frischem Pulver (24) vom zweiten Behälter (26) in die Schleusenkammer (56) das dritte Absperrorgan (72) geöffnet wird, während das zweite Absperrorgan (60) am Ausgang (58) geschlossen ist und das erste Absperrorgan (52) am Eingang der Schleusenkammer (56) geschlossen oder offen ist.

7. Pulver-Sprühbeschichtungsvorrichtung nach Anspruch 6,
   **dadurch gekennzeichnet,**
   daß die "offen-Zeitdauer" des dritten Absperrorgans (72) in der Frischpulverzuleitung (70) in eine "geschlossen"-Zeitdauer des ersten Absperrorgans (52) am Eingang der Schleusenkammer (56) fällt, und daß jedoch die "offen"-Zeitdauer des dritten Absperrorgans (72) bereits beginnt, während die "offen"-Zeitdauer des ersten Absperrorgans (52) noch nicht abgelaufen ist.

8. Pulver-Sprühbeschichtungsvorrichtung nach Anspruch 7,
   **dadurch gekennzeichnet,**
   daß die "offen"-Zeitdauer des dritten Absperrorgans (72) in der Pulverzufuhrleitung (70) beginnt, nachdem mehr als 50 % der "offen"-Zeitdauer des ersten Absperrorgans (52) am Eingang der Schleusenkammer (56) bereits abgelaufen ist.

9. Pulver-Sprühbeschichtungsvorrichtung nach einem der Ansprüche 1 bis 8,
**dadurch gekennzeichnet**,
daß die Zufuhr von frischem Pulver (24) aus dem zweiten Behälter (26) in Abhängigkeit vom Pulver-Niveau (92) des Haupt-Behälters (6) automatisch gesteuert oder geregelt wird.

10. Pulver-Sprühbeschichtungsvorrichtung nach einem der Ansprüche 1 bis 9,
**dadurch gekennzeichnet**,
daß der Haupt-Behälter (6) und der zweite Behälter (26) je ein Lieferanten-Behälter ist, in welchem der Pulverlieferant frisches Pulver an den Pulveranwender liefert, und daß in jeden dieser beiden Lieferanten-Behälter eine Fluidisiereinrichtung (76, 82) zur Fluidisierung des frischen Pulvers (24) eingetaucht ist.

11. Pulver-Sprühbeschichtungsvorrichtung nach einem der Ansprüche 1 bis 10,
**dadurch gekennzeichnet,**
daß mindestens einer der Behälter (6, 26) in Vibration versetzt wird, um das Pulver in ihm aufzulok-kern.

**Claims**

1. Powder spray coating device with

- powder feed equipment (2) for pneumatic conveyance of powder from a reservoir (6) to at least one spraying device (8),
- a powder recovery device (10) which has a vacuum source (12) for production of a vacuum for sucking off surplus sprayed powder which does not adhere to the object which is to be coated, a powder separator (18) for separation of the sucked of surplus powder from the suction flow of the vacuum source and a lock (20) through which the powder separated off from the suction flow by the powder separator returns back into the reservoir, characterised in that fresh powder (24) is sucked by the vacuum from the vacuum source (12) out of a second container (26) into the powder recovery device (10) and then guided from the recovery device in the same way as the surplus powder into the reservoir (6).

2. Powder spray coating device according to Claim 1, characterised in that the lock (20) has a lock chamber (56) whose inlet (54) may be opened and closed by a first shut-off device (52) and whose outlet (58) may be opened and closed by a second shut-off device whereby the outlet is closed when the inlet is opened and the outlet may only be opened when the inlet is closed and in that a fresh powder feed pipe is attached to the lock chamber (56) for the supply of the fresh powder.

3. Powder spray coating device according to Claim 2, characterised in that the lock chamber (56) is of a size such that, in addition to the surplus powder from the powder separator (18), it may simultaneously also contain fresh powder from (24) from the second container (26).

4. Powder spray coating device according to one of the Claims 2 to 3, characterised in that the second shut-off device (60) at the outlet from lock chamber (56) is closed whilst the fresh powder (24) is sucked by the vacuum prevailing in the lock chamber (56) into this same chamber.

5. Powder spray coating device according to one of the Claims 1 to 4, characterised in that a device (76, 82) is provided in the second chamber for fluidising the fresh powder (24).

6. Powder spray coating device according to one of the Claims 2 to 5, characterised in that at least a third shut-off device (72) is situated in the fresh powder feed pipe (70) and in that for sucking fresh powder (24) from the second container (26) into the lock chamber (56) the third shut-off device (72) is opened whilst the second shut-off device (60) at the outlet (58) is closed and the first shut-off device (52) at the inlet to the lock chamber (56) is closed or open.

7. Powder spray coating device according to Claim 6, characterised in that "open period" of the third shut-off device (72) in the fresh powder supply line (70) falls into a "closed"-period of the first shut-off device (52) at the inlet of the lock chamber (56) and in that the "open" period of the third shut-off device (72), however, begins before the "open" period of the first shut-off device (52) has yet expired.

8. Powder spray coating device according to Claim 7, characterised in that the "open" period of the third shut-off device (72) in the fresh powder supply line (70) begins after more than 50% of the "open" period of the first shut-off device (52) at the inlet of the lock chamber (56) has already expired.

9. Powder spray coating device according to one of the Claims 1 to 8, characterised in that the supply of fresh powder (24) from the second container (26) is automatically controlled or regulated as a function of the powder level (92) in the reservoir (6).

10. Powder spray coating device according to one of the Claims 1 to 9, characterised in that the reservoir (6) and the second container (26) are each a supplier's container in which the powder supplier delivers fresh powder to the powder user and in that fluidising equipment (76, 82) for fluidising the fresh powder (24) is dipped into each of these two supplier's containers.

11. Powder spray coating device according to one of the Claims 1 to 10, characterised in that at least one of the containers (6, 26) is vibrated in order to loosen the powder inside it.

## Revendications

1. Dispositif de revêtement de poudre par pulvérisation, avec

   - un dispositif d'alimentation en poudre (2) pour transporter pneumatiquement de la poudre d'un récipient principal (6) à au moins un dispositif de pulvérisation (8),
   - un dispositif de récupération de poudre (10), qui présente une source de dépression (12) pour produire une dépression afin d'aspirer la poudre pulvérisée excédentaire qui n'adhère pas sur un objet à revêtir, un séparateur de poudre (18) pour séparer la poudre excédentaire aspirée du courant d'air d'aspiration de la source de dépression, et un sas (20) par lequel la poudre séparée du courant d'air d'aspiration retourne du séparateur de poudre dans le récipient principal,
   caractérisé en ce que de la poudre fraîche (24) est aspirée par la dépression de la source de dépression (12) d'un deuxième récipient (26) dans le dispositif de récupération de poudre (10), puis est dirigée du dispositif de récupération dans le récipient principal (6) par la même voie que la poudre excédentaire.

2. Dispositif de revêtement de poudre par pulvérisation selon la revendication 1, caractérisé en ce que le sas (20) présente une chambre de sas (56), dont l'entrée (54) peut être ouverte et fermée par un premier organe d'isolement (52) et dont la sortie (58) peut être ouverte et fermée par un deuxième organe d'isolement (60), la sortie étant fermée lorsque l'entrée est ouverte, et la sortie ne pouvant être ouverte que si l'entrée est fermée, et en ce qu'une conduite d'alimentation en poudre fraîche est raccordée à la chambre de sas (56) pour l'apport de la poudre fraîche.

3. Dispositif de revêtement de poudre par pulvérisation selon la revendication 2, caractérisé en ce que la chambre de sas (56) est suffisamment grande pour pouvoir contenir simultanément, en plus de la poudre excédentaire provenant du séparateur de poudre (18), la poudre fraîche (24) provenant du deuxième récipient (26).

4. Dispositif de revêtement de poudre par pulvérisation selon la revendication 2 ou 3, caractérisé en ce que le deuxième organe d'isolement (60) à la sortie de la chambre de sas (56) est fermé pendant que la poudre fraîche (24) est aspirée dans la chambre de sas (56) par la dépression régnant dans cette chambre de sas.

5. Dispositif de revêtement de poudre par pulvérisation selon l'une des revendications 1 à 4, caractérisé en ce qu'un dispositif (76, 82) est prévu dans le deuxième récipient pour fluidiser la poudre fraîche (24).

6. Dispositif de revêtement de poudre par pulvérisation selon l'une des revendications 2 à 5, caractérisé en ce qu'au moins un troisième organe d'isolement (72) se trouve dans la conduite d'alimentation en poudre fraîche (70), et en ce que le troisième organe d'isolement (72) est ouvert pour aspirer de la poudre fraîche (24) du deuxième récipient (26) dans la chambre de sas (56), tandis que le deuxième organe d'isolement (60) à la sortie (58) est fermé et que le premier organe d'isolement (52) à l'entrée de la chambre de sas (56) est ouvert ou fermé.

7. Dispositif de revêtement de poudre par pulvérisation selon la revendication 6, caractérisé en ce que la "période d'ouverture" du troisième organe d'isolement (72) dans la conduite d'alimentation en poudre fraîche (70) se situe dans une "période de fermeture" du premier organe d'isolement (52) à l'entrée de la chambre de sas (56), et en ce que la "période d'ouverture" du troisième organe d'isolement (72) commence toutefois déjà alors que la "période d'ouverture" du premier organe d'isolement (52) n'est pas encore achevée.

8. Dispositif de revêtement de poudre par pulvérisation selon la revendication 7, caractérisé en ce que la "période d'ouverture" du troisième organe d'isolement (72) dans la conduite d'alimentation en poudre (70) commence après que plus de 50 % de la "période d'ouverture" du premier organe d'isolement (52) à l'entrée de la chambre de sas (56) s'est déjà écoulée.

9. Dispositif de revêtement de poudre par pulvérisation selon l'une des revendications 1 à 8, caractérisé en ce que l'apport de poudre fraîche (24) à partir du deuxième récipient (26) est commandé ou régulé automatiquement en fonction du niveau de poudre (92) du récipient principal (6).

10. Dispositif de revêtement de poudre par pulvérisation selon l'une des revendications 1 à 9, caractérisé en ce que le récipient principal (6) et le deuxième récipient (26) sont chacun un récipient de fournisseur, dans lequel le fournisseur de poudre livre la poudre fraîche à l'utilisateur de poudre, et en ce qu'un dispositif de fluidisation (76, 82) est enfoncé dans chacun de ces deux récipients de fournisseur pour fluidiser la poudre fraîche (24).

11. Dispositif de revêtement de poudre par pulvérisation selon l'une des revendications 1 à 10, **caractérisé** en ce qu'au moins un des récipients (6, 26) est mis en vibration afin de désagréger la poudre présente dans ce récipient.

# FIG.1

# FIG. 2

<u>52</u>

1

0    3    6    9    12    15    18    t [sec]

<u>60</u>

1

0    t [sec]

<u>72</u>

$t_{x1max.}$    $t_{x1min.}$    $t_{x2min.}$    $t_{x2max.}$

1

0    $t_{x1}$    $t_{x2}$    t [sec]